# EUROPÄISCHE PATENTSCHRIFT

(11) **EP 1 389 566 B1**
(45) Veröffentlichungstag und Bekanntmachung des Hinweises auf die Patenterteilung: **21.06.2006**
(21) Anmeldenummer: 03102437.5
(22) Anmeldetag: 06.08.2003
(51) Int. Cl.: B60R 11/04, G07C 5/08

(54) **Kameraanordnung für Kraftfahrzeuge**
Camera arrangement for motor vehicles
Dispositif de caméra pour véhicules motorisés

(30) Priorität: 16.08.2002 DE 10237608
(43) Veröffentlichungstag der Anmeldung: 18.02.2004
(73) Patentinhaber: Hella KGaA Hueck & Co., 59552 Lippstadt (DE)
(72) Erfinder: Schäfer, Heiko, 59597, Erwitte (DE); Hunecke, Jens, 59505, Bad Sassendorf (DE)

(56) Entgegenhaltungen:
- DE-A- 10 010 434
- US-B1- 6 170 955
- US-B1- 6 672 745
- PATENT ABSTRACTS OF JAPAN vol. 016, no. 522 (P-1445), 27. Oktober 1992 (1992-10-27) & JP 04 194827 A (MITSUBISHI ELECTRIC CORP), 14. Juli 1992 (1992-07-14)

## Beschreibung

Die Erfindung bezieht sich auf eine Kameraanordnung für Kraftfahrzeuge mit einer Kamera, die im Fahrzeuginnenraum hinter einer Scheibe (Windschutzscheibe) angeordnet ist. Eine derartige Anordnung ist beispielsweise aus der DE 40 16 570 A1 bekannt. Problematisch bei einer derartigen Kameraanordnung ist jedoch die Beschlagbildung an der Scheibeninnenseite, die durch Kondensation von Wasserdampf auf dem Fahrzeuginnenraum an der besonders im Winter relativ kalten Scheibe entsteht. Eine beschlagene Scheibeninnenseite beeinträchtigt die Bilderfassung mittels der Kamera erheblich oder macht sie sogar unmöglich.

Aus der US 6,170,955 B1 ist eine Kameraanordnung bekannt, bei der eine Kamera an der Windschutzscheibe eines Kraftfahrzeugs befestigt ist. Die Kameralinse ist dabei gegenüber der Windschutzscheibe fest positioniert und durch ein Dichtungselement abgeschlossen, um das Eindringen von Feuchtigkeit zu verhindern.

Aus der US 66 72 745 B1 ist weiterhin eine Kamuraanordnung bekannt, welche die Merkmale des Oberbegriffs des Anspruchs 1 zeigt.

Aufgabe der Erfindung ist es daher, die vorstehend genannte Kameraanordnung dahingehend zu verbessern, daß Beschlag auf der Scheibeninnenseite im Erfassungsbereich der Kamera vermieden wird.

Diese Aufgabe wird von einer Kameraanordnung gemäß Anspruch 1 gelöst.

Die der Erfindung zugrunde liegende Idee zur Lösung dieser Aufgabe besteht darin, zumindest in einem Teilbereich der Scheibe, der von der Kamera erfasst wird, hinter der Scheibe und mit Abstand zu dieser eine transparente Zusatzscheibe anzuordnen, so daß zwischen Scheibe und Zusatzscheibe eine Luftschicht eingeschlossen ist. Diese Luftschicht wirkt zum einen als thermische Isolationsschicht, wodurch erreicht wird, daß die Temperatur der Zusatzscheibe auch bei einer sehr kalten Windschutzscheibe sich nicht stark von der Temperatur im Fahrzeuginnenraum unterscheidet. Damit wird Kondensation von Wasserdampf auf der Zusatzscheibe vermieden, da diese keine" Kühlfalle" im Fahrzeuginnenraum darstellt. Darüber hinaus ist das zwischen der Windschutzscheibe und der Zusatzscheibe eingeschlossene Luftvolumen so klein, daß die absolut vorhandene Menge an Wasserdampf in diesem Volumen für eine die Kamerasicht beeinträchtigende Beschlagsbildung nicht ausreicht.

Versuche im Klimaschrank haben gezeigt, daß die beschlagshemmende Wirkung zuverlässig eintritt, wenn der Abstand zwischen Windschutzscheibe und Zusatzscheibe kleiner als 3 mm ist. Insbesondere bei einem Abstand zwischen 1 mm und 2mm ist die beschlagshemmende Wirkung besonders gut, da einerseits eine ausreichend dicke Luftschicht für die thermische Isolation vorhanden ist und andererseits das eingeschlossene Luftvolumen und die damit eingeschlossene absolute Feuchtigkeitsmenge ausreichend gering ist.

Anhand der beigefügten Zeichnungen soll die Erfindung nachfolgende näher erläutert werden. Es zeigt:
- Figur 1: einen Schnitt durch eine erfindungsgemäße Kameraanordnung,

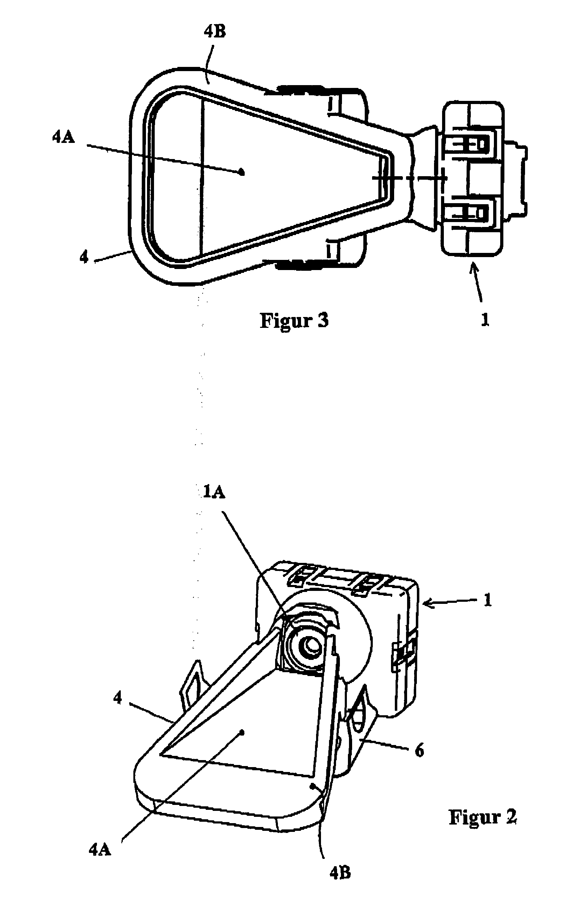

- Figur 2: eine perspektivische Ansicht einer Abdeckkappe mit daran angeordneter Kamera, welcher hinter der erfindungsgemäßen Zusatzscheibe befestigt wird,
- Figur 3: eine Draufsicht auf das Lichteintrittsfenster der Abdeckkappe.

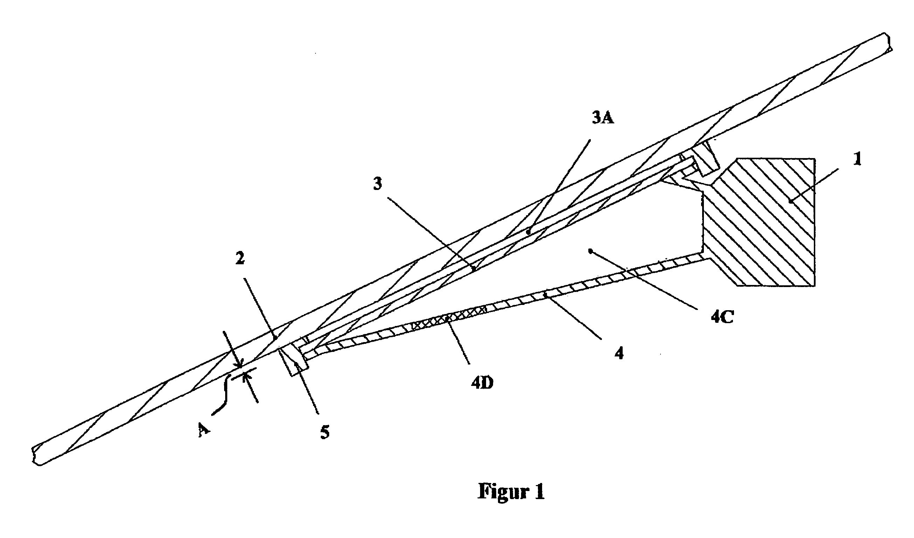

Die erfindungsgemäße Kameraanordnung ist in Figur 1 gezeigt. Sie besteht im wesentlichen aus einer transparenten Zusatzscheibe (3) die vorzugsweise aus Kunststoff besteht, und im Abstand (A) vor der Windschutzscheibe (2) angeordnet ist, so daß zwischen der Windschutzscheibe (2) und der Zusatzscheibe (3) eine Luftschicht (3A) eingeschlossen ist. Dabei erstreckt sich die Zusatzscheibe (3) zumindest über den Bereich der Windschutzscheibe (2), der von der Kamera (1) erfasst wird.

Die Verwendung von Kunststoff (anstelle von Glas) für die Zusatzscheibe (3) hat neben fertigungstechnischen Gründen den Vorteil, daß die Wärmeleitung von Kunststoff wesentlich geringer ist als die von Glas, so daß zur sehr guten thermischen Isolierung durch die Luftschicht auch noch die thermische Isolierung durch die Zusatzscheibe (3) selbst hinzutritt.

Um die Zusatzscheibe (3) mit Abstand zur Windschutzscheibe (2) an dieser zu befestigten, ist vorzugsweise ein Befestigungsring (5) vorgesehen, auf dem die Zusatzscheibe (3) aufliegt. Bei diesem Befestigungsring (5) muß es sich selbstverständlich nicht um einen kreisförmigen Ring handeln. Ebenso ist eine rechteckige, trapezförmige, ovale oder sonst wie geartete Form möglich. Der Befestigungsring (5) selbst wird vorzugsweise auf die Innenseite der Windschutzscheibe (2) geklebt. Zur lagefixierten Aufnahme der Zusatzscheibe (3) weist der Befestigungsring (5) innenseitig unter Ausbildung einer Auflageschulter für die Zusatzscheibe (3) eine Stufe auf. Seitlich wird die Lage der Zusatzscheibe (3) von der Innenwandung des Befestigungsringes (5) im Bereich der Stufe fixiert.

Um den Eintritt von störendem Licht (z.B. von der Zusatzscheibe reflektiertes Licht aus dem Fahrzeuginnenraum) in das Kameraobjektiv (1A) zu vermeiden, ist vorzugsweise eine trichterförmige lichtdichte Abdeckkappe (4) vorgesehen, welche den Raum zwischen der Windschutzscheibe (2) und dem Kameraobjektiv (1A) bis auf eine der Windschutzscheibe zugewandte Lichteintrittsöffnung (4A) lichtdicht umschließt. Die Kamera (1) mit ihrem Kameraobjektiv (1A) ist an dem der Windschutzscheibe (2) abgewandten Ende der Abdeckkappe (4) angeordnet. Die erfindungsgemäße Zusatzscheibe (3) ist vor der Lichteintrittsöffnung (4A) der Abdeckkappe (4) angeordnet und verschließt diese, so daß hinter der Zusatzscheibe (3) in der trichterförmigen Abdeckkappe (4) ein zweites Luftvolumen (4C) eingeschlossen wird. Dabei wird die lichtdichte Abdeckkappe (4) vorzugsweise auch staubdicht abgeschlossen, so daß störende Staubablagerungen auf dem Kameraobjektiv (1A) und der Zusatzscheibe (3) vermieden werden. Die Abdeckkappe (4) liegt dabei mit ihrem die Lichteintrittsöffnung (4A) einfassenden Rand (4B) an der Zusatzscheibe (3) an. Da das Luftvolumen (4C) der trichterförmigen Abdeckkappe (4) größer ist, weist diese vorzugsweise eine wasserdampfdurchlässige Membran (4D) auf, um einen Austritt von Feuchtigkeit und damit das Beschlagen der Zusatzscheibe (3) auch unter widrigsten Umständen zuverlässig zu verhindern Die trichterförmige Abdeckkappe (4), welche sich in Richtung von der Windschutzscheibe (2) weg verjüngt, definiert gleichzeitig auch den Erfassungsbereich der Kamera (1).

In einer Ausführungsform wird die Zusatzscheibe (3) unlösbar mit dem Befestigungsring (5) verbunden. Dies kann beispielsweise dadurch erfolgen, daß die Zusatzscheibe (3) auf den Befestigungsring (5) aufgeklebt wird, oder aber durch Ultraschall- oder Laserschweißen der beiden aus Kunststoff bestehenden Teile, oder aber dadurch, daß die beiden Teile im Spritzgießverfahren einstückig aus Kunststoff hergestellt werden, wobei der Befestigungsring (5) vorzugsweise aus einem nicht transparenten Kunststoffmaterial hergestellt wird, während die Zusatzscheibe (3) aus einem transparenten Kunststoffmaterial hergestellt wird. In dieser Ausführungsform wird die Abdeckkappe (4) entweder auf die Zusatzscheibe (3) geklebt oder aber über eine Feder (6) zwischen dem Befestigungsring (5) und der Abdeckkappe (4) gegen die Zusatzscheibe (3) gedrückt.

In einer weiteren Ausführungsform wird die Abdeckkappe (4) mit der Zusatzscheibe (3) im Zweikomponenten-Spritzgießverfahren einstückig aus Kunststoff hergestellt sind, wobei die Abdeckkappe (4) aus einem nicht transparenten Kunststoffmaterial hergestellt wird, während die Zusatzscheibe (3) aus einem transparenten Kunststoffmaterial hergestellt wird. In dieser Ausführungsform wird die einstückig mit Abdeckkappe (4) ausgebildete Zusatzscheibe (3) entweder auf den Befestigungsring (5) geklebt oder aber über eine Feder (6) zwischen dem Befestigungsring (5) und der Abdeckkappe (4) gegen die Befestigungsring (5) gedrückt.

In einer weiteren Ausführungsform wird die Abdeckkappe (4) mit der Zusatzscheibe (3) und dem Befestigungsring (6) im Zweikomponenten-Spritzgießverfahren einstückig aus Kunststoff hergestellt sind, wobei die Abdeckkappe (4) aus einem nicht transparenten Kunststoffmaterial hergestellt ist, während die Zusatzscheibe (3) aus einem transparenten Kunststoffmaterial hergestellt ist. Dabei wird der Befestigungsring (6) ebenfalls vorzugsweise aus einem nicht transparenten Kunststoffmaterial hergestellt. In dieser Ausführungsform wird der einstückig mit der Zusatzscheibe (3) und der Abdeckkappe (4) ausgebildete Befestigungsring (6) an die Windschutzscheibe (2) angeklebt wird.

In einer weiteren Ausführungsform wird die Zusatzscheibe (3) lose in den Befestigungsring (6) eingelegt und dort vom Anpressdruck der Abdeckkappe (4) gehalten, der von einer Feder (6) zwischen Befestigungsring (5) und Abdeckkappe (4) erzeugt wird.

Wenn in den vorstehenden Ausführungen von transparent die Rede war, so bedeutet dies entweder durchlässig für Licht aus dem sichtbaren Spektralbereich und/oder durchlässig für infrarotes Licht. Letzteres ist insbesondere in Verbindung mit Kameraanordnungen für Nachtsichtgeräte in Kraftfahrzeugen relevant.

### Bezugszeichenliste:

1) Kamera
1A) Kameraobjektiv bzw. Objektivtubus an der Kamera
2) Windschutzscheibe
3) transparente Zusatzscheibe
3A) Luftschicht zwischen Windschutzscheibe und Zusatzscheibe
4) trichterförmige Abdeckkappe
4A) Lichteintrittsöffnung in der trichterförmigen Abdeckkappe
4B) Rand der trichterförmigen Abdeckkappe, welcher die Lichteintrittsöffnung umschließt
4C) Luftvolumen in der Abdeckkappe
4D) Membran in der Abdeckkappe
5) Befestigungsring
6) Feder zwischen Befestigungsring und Abdeckkappe

## Patentansprüche

1. Kameraanordnung für Kraftfahrzeuge mit einer Kamera (1), die im Fahrzeuginnenraum hinter einer Windschutzscheibe (2) angeordnet ist, wobei
zumindest in einem Teilbereich der Windschutzscheibe (2), der von der Kamera (1) erfasst wird, hinter der Windschutzscheibe (2) und mit Abstand (A) zu dieser eine transparente Zusatzscheibe (3) angeordnet ist, so daß zwischen Windschutzscheibe (2) und Zusatzscheibe (3) eine Luftschicht (3A) eingeschlossen ist, und weiterhin
eine lichtdichte Abdeckkappe (4) vorgesehen ist, welche den Raum zwischen der Windschutzscheibe (2) und dem Kameraobjektiv (1A) lichtdicht umschließt,
die Abdeckkappe (4) auf der der Windschutzscheibe (2) zugewandten Seite eine Lichteintrittsöffnung (4A) aufweist und
die Kamera (1) mit ihrem Kameraobjektiv (1 A) an dem der Windschutzscheibe abgewandten Ende der Abdeckkappe (4) angeordnet ist, **dadurch gekennzeichnet, daß** an der Windschutzscheibe (2) ein Befestigungsring (5) angeordnet ist, auf dem die Zusatzscheibe (3) mit Abstand (A) zur Windschutzscheibe (2) aufliegt, daß
die Zusatzscheibe (3) vor der Lichteintrittsöffnung (4A) der Abdeckkappe (4) angeordnet ist,
und daß die Abdeckkappe (4) in Form eines Trichters der sich in Richtung von der Windschutzscheibe (2) weg verjüngt ausgebildet ist.

2. Kameraanordnung nach Anspruch 1,
**dadurch gekennzeichnet, daß**
der Abstand (A) zwischen Windschutzscheibe (2) und Zusatzscheibe (3) kleiner als 3mm ist.

3. Kameraanordnung nach Anspruch 1 oder 2,
**dadurch gekennzeichnet, daß**
die Zusatzscheibe (3) aus einem transparenten Kunststoffmaterial besteht.

4. Kameraanordnung nach Anspruch 3,
**dadurch gekennzeichnet, daß**
die Zusatzscheibe (3) auf den Befestigungsring (5) aufgeklebt wird.

5. Kameraanordnung nach Anspruch 3,
**dadurch gekennzeichnet, daß**
die Zusatzscheibe (3) und der Befestigungsring (5) aus Kunststoff bestehen, wobei Zusatzscheibe (3) und der Befestigungsring (5) durch Ultraschall oder Laserschweißen miteinander verbunden werden.

6. Kameraanordnung nach Anspruch 3,
**dadurch gekennzeichnet, daß**
die Zusatzscheibe (3) und der Befestigungsring (5) im Spritzgießverfahren einstückig aus Kunststoff hergestellt sind.

7. Kameraanordnung nach Anspruch 6,
**dadurch gekennzeichnet, daß**
die Zusatzscheibe (3) und der Befestigungsring (5) im Zweikomponenten-Spritzgießverfahren einstückig aus Kunststoff hergestellt sind, wobei der Befestigungsring aus einem nicht transparenten Kunststoffmaterial hergestellt ist, während die Zusatzscheibe aus einem transparenten Kunststoffmaterial hergestellt ist.

8. Kameraanordnung nach einem der Ansprüche 4 bis 7,
**dadurch gekennzeichnet, daß**
die Abdeckkappe (4) auf die Zusatzscheibe (3) aufgeklebt wird.

9. Kameraanordnung nach einem der Ansprüche 4 bis 7,
**dadurch gekennzeichnet, daß**
die Abdeckkappe (4) über eine Feder (6) zwischen dem Befestigungsring (5) und der Abdeckkappe (4) gegen die Zusatzscheibe (2) gedrückt wird.

10. Kameraanordnung nach Anspruch 3,
**dadurch gekennzeichnet, daß**
die Abdeckkappe (4) mit der Zusatzscheibe (3) im Zweikomponenten-Spritzgießverfahren einstückig aus Kunststoff hergestellt sind, wobei die Abdeckkappe aus einem nicht transparenten Kunststoffmaterial hergestellt ist, während die Zusatzscheibe aus einem transparenten Kunststoffmaterial hergestellt ist.

11. Kameraanordnung nach Anspruch 10,
**dadurch gekennzeichnet, daß**
die einstückig mit der Abdeckkappe (4) ausgebildete Zusatzscheibe (3) auf den Befestigungsring (5) geklebt wird.

12. Kameraanordnung nach Anspruch 10,
**dadurch gekennzeichnet, daß**
die einstückig mit der Abdeckkappe (4) ausgebildete Zusatzscheibe (3) über eine Feder (6) zwischen dem Befestigungsring (5) und der Abdeckkappe gegen den Befestigungsring gedrückt wird.

13. Kameraanordnung nach Anspruch 3,
**dadurch gekennzeichnet, daß**
die Abdeckkappe (4) mit der Zusatzscheibe (3) und dem Befestigungsring (5) im Zweikomponenten-Spritzgießverfahren einstückig aus Kunststoff hergestellt sind, wobei die Abdeckkappe aus einem nicht transparenten Kunststoffmaterial hergestellt ist, während die Zusatzscheibe aus einem transparenten Kunststoffmaterial hergestellt ist.

14. Kameraanordnung nach Anspruch 13,
**dadurch gekennzeichnet, daß**
der Befestigungsring (5) aus einem nicht transparenten Kunststoffmaterial hergestellt ist.

15. Kameraanordnung nach Anspruch 13 oder 14,
**dadurch gekennzeichnet, daß**
der einstückig mit der Zusatzscheibe (3) und der Abdeckkappe (4) ausgebildete Befestigungsring (5) an die Windschutzscheibe (2) geklebt wird.

16. Kameraanordnung nach einem der Ansprüche 3 bis 15,
**dadurch gekennzeichnet, daß**
die Abdeckkappe (4) eine wasserdampfdurchlässige Membran (4D) aufweist.

## Claims

1. Camera arrangement for motor vehicles with a camera (1), which is arranged inside the vehicle behind a windscreen (2), in which in at least part of the windscreen (2) captured by the camera (1) a transparent additional screen (3) is arranged behind the windscreen (2) at a distance (A) from it so that a layer of air (3A) is enclosed between the windscreen (2) and the additional screen (3) and also a lightproof cover (4) is provided, which encloses the space between the windscreen (2) and the camera lens (1A) in a lightproof way, the cover (4) has an opening for the light to enter (4A) on the side facing towards the windscreen (2) and the camera (1) is arranged with the camera lens (1A) on the end of the cover (4) facing away from the windscreen, **characterised in that** a fastening ring (5) is arranged on the windscreen (2), on which the additional screen (3) lies at a distance (A) from the windscreen (2), that the additional screen (3) is arranged in front of the opening for the light to enter (4A) of the cover (4) and that the cover (4) is made in the form of a funnel which narrows in the direction going away from the windscreen (2).

2. Camera arrangement according to claim 1,
**characterised in that**
the distance (A) between the windscreen (2) and the additional screen (3) is less than 3 mm.

3. Camera arrangement according to claim 1 or 2,
**characterised in that**
the additional screen (3) consists of a transparent plastic material.

4. Camera arrangement according to claim 3,
**characterised in that**
the additional screen (3) is affixed to the fastening ring (5).

5. Camera arrangement according to claim 3,
**characterised in that**
the additional screen (3) and the fastening ring (5) consist of plastic, in which the additional screen (3) and the fastening ring (5) are joined together by ultrasound or laser welding.

6. Camera arrangement according to claim 3,
**characterised in that**
the additional screen (3) and the fastening ring (5) are made from plastic in one piece in the injection moulding process.

7. Camera arrangement according to claim 6,
**characterised in that**
the additional screen (3) and the fastening ring (5) are made of plastic in one piece in the two component injection moulding process, in which the fastening ring is made of a non transparent plastic material, whereas the additional screen is made of a transparent plastic material.

8. Camera arrangement according to one of claims 4 to 7,
**characterised in that**
the cover (4) is stuck to the additional screen (3).

9. Camera arrangement according to one of claims 4 to 7,
**characterised in that**
the cover (4) is pressed against the additional screen (2) by a spring (6) between the fastening ring (5) and the cover (4).

10. Camera arrangement according to claim 3,
**characterised in that**
the cover (4) is made of plastic in one piece with the additional screen (3) in the two component injection moulding process, in which the cover is made of a non transparent plastic material, whereas the additional screen is made of a transparent plastic material.

11. Camera arrangement according to claim 10,
**characterised in that**
the additional screen (3) made in one piece with the cover (4) is stuck to the fastening ring (5).

12. Camera arrangement according to claim 10,
**characterised in that**
the additional screen (3) made in one piece with the cover (4) is pressed against the fastening ring by a spring (6) between the fastening ring (5) and the cover.

13. Camera arrangement according to claim 3,
**characterised in that**
the cover (4) is made of plastic in one piece with the additional screen (3) and the fastening ring (5) in the two component injection moulding process, in which the cover is made of a non transparent plastic material, whereas the additional screen is made of a transparent plastic material.

14. Camera arrangement according to claim 14,
**characterised in that**
the fastening ring (5) is made of a non transparent plastic material.

15. Camera arrangement according to claim 13 or 14,
**characterised in that**
the fastening ring (5) made in one piece with the additional screen (3) and the cover (4) is affixed to the windscreen (2).

16. Camera arrangement according to one of claims 3 to 15,
**characterised in that**
the cover (4) has a steam permeable membrane (4D).

## Revendications

1. Agencement de caméra pour véhicules, comportant une caméra (1) qui est agencée dans l'habitacle de véhicule derrière un pare-brise (2), dans lequel
au moins dans une région partielle du pare-brise (2) qui est détectée par la caméra (1) est agencée, derrière le pare-brise (2) et à distance (A) de celle-ci, une vitre additionnelle (3) transparente de telle sorte qu'une couche d'air (3A) est enfermée entre le pare-brise (2) et la vitre additionnelle (3), et par ailleurs
il est prévu un couvercle (4) opaque qui renferme de manière opaque l'espace entre le pare-brise (2) et l'objectif de caméra (1A),
le couvercle (4) présente sur le côté tourné vers le pare-brise (2) une ouverture d'entrée de lumière (4A) et
la caméra (1) est agencée avec son objectif de caméra (1A) à l'extrémité du couvercle détournée du pare-brise,
**caractérisé en ce que** sur le pare-brise (2) est agencée une bague de fixation (5) sur laquelle la vitre additionnelle (3) est en appui à distance (A) du pare-brise (2),
**en ce que** la vitre additionnelle (3) est agencée devant l'ouverture d'entrée de lumière (4A) du couvercle (4) et
**en ce que** le couvercle (4) est réalisé en forme d'un entonnoir qui se rétrécit en direction d'éloignement du pare-brise (2).

2. Agencement de caméra selon la revendication 1,
**caractérisé en ce que** la distance (A) entre le pare-brise (2) et la vitre additionnelle (3) est inférieure à 3 mm.

3. Agencement de caméra selon la revendication 1 ou 2,
**caractérisé en ce que** la vitre additionnelle (3) est en une matière plastique transparente.

4. Agencement de caméra selon la revendication 3,
**caractérisé en ce que** la vitre additionnelle (3) est collée sur la bague de fixation (5).

5. Agencement de caméra selon la revendication 3, **caractérisé en ce que**
la vitre additionnelle (3) et la bague de fixation (5) sont en matière plastique, la vitre additionnelle (3) et la bague de fixation (5) étant reliées l'une à l'autre par soudage aux ultrasons ou par soudage laser.

6. Agencement de caméra selon la revendication 3, **caractérisé en ce que**
la vitre additionnelle (3) et la bague de fixation (5) sont réalisées en matière plastique d'une seule pièce par procédé de moulage par injection.

7. Agencement de caméra selon la revendication 6,
**caractérisé en ce que** la vitre additionnelle (3) et la bague de fixation (5) sont réalisées en matière plastique d'une seule pièce par procédé de moulage par injection à deux composants, la bague de fixation étant fabriquée en une matière plastique non transparente tandis que la vitre additionnelle est fabriquée en une matière plastique transparente.

8. Agencement de caméra selon l'une des revendications 4 à 7,
**caractérisé en ce que**
le couvercle (4) est collé sur la vitre additionnelle (3).

9. Agencement de caméra selon l'une des revendications 4 à 7,
**caractérisé en ce que**
le couvercle (4) est pressé contre la vitre additionnelle (3) par un ressort (6) situé entre la bague de fixation (5) et le couvercle (4).

10. Agencement de caméra selon la revendication 3,
**caractérisé en ce que**
le couvercle (4) avec la vitre additionnelle (3) sont réalisés en matière plastique d'une seule pièce en procédé de moulage par injection à deux composants, le couvercle étant fabriqué en une matière plastique non transparente tandis que la vitre additionnelle (3) est fabriquée en une matière plastique transparente.

11. Agencement de caméra selon la revendication 10,
**caractérisé en ce que**
la vitre additionnelle (3) réalisée d'une seule pièce avec le couvercle (4) est collée sur la bague de fixation (5).

12. Agencement de caméra selon la revendication 10,
**caractérisé en ce que**
la vitre additionnelle (3) réalisée d'une seule pièce avec le couvercle (4) est pressée contre la bague de fixation par un ressort (6) situé entre la bague de fixation (5) et le couvercle.

13. Agencement de caméra selon la revendication 3,
**caractérisé en ce que**
le couvercle (4) avec la vitre additionnelle (3) et la bague de fixation (5) sont réalisés en matière plastique d'une seule pièce en procédé de moulage par injection à deux composants, le couvercle étant fabriqué en une matière plastique non transparente tandis que la vitre additionnelle est fabriquée en une matière plastique transparente.

14. Agencement de caméra selon la revendication 13,
**caractérisé en ce que**
la bague de fixation (5) est fabriquée en une matière plastique non transparente.

15. Agencement de caméra selon la revendication 13 ou 14,
**caractérisé en ce que**
la bague de fixation (5) réalisée d'une seule pièce avec la vitre additionnelle (3) et le couvercle (4) est collée sur le pare-brise (2).

16. Agencement de caméra selon l'une des revendications 3 à 15,
**caractérisé en ce que**
le couvercle (4) présente une membrane (4D) perméable à la vapeur d'eau.
